# EUROPEAN PATENT SPECIFICATION

(11) **EP 3 067 315 B1**
(45) Date of publication and mention of the grant of the patent: **06.03.2019**
(21) Application number: 16154648.6
(22) Date of filing: 08.02.2016
(51) Int. Cl.: C01B 23/00, B01D 53/26, B01D 53/62, C01B 32/50, F25J 1/00, F25J 3/02, B01D 53/00, B01D 53/75, F25J 3/08

(54) **LIGHT GAS SEPARATION PROCESS AND SYSTEM**
LEICHTGASTRENNUNGSVERFAHREN UND VORRICHTUNG
PROCÉDÉ DE SÉPARATION DE GAZ LÉGER ET SYSTÈME

(30) Priority: 12.03.2015 US 201514645677
(43) Date of publication of application: 14.09.2016
(73) Proprietor: Praxair Technology, Inc., Danbury, CT 06810-5113 (US)
(72) Inventor: Dray, Michael J., Amherst, NY 14068 (US); Howard, Henry Edward, Grand Island, NY 14072 (US)
(74) Representative: BRP Renaud & Partner mbB Rechtsanwälte Patentanwälte Steuerberater

(56) References cited:
- EP-A1- 0 600 513
- EP-A2- 2 692 411
- WO-A2-2006/055324
- WO-A2-2009/142919

## Description

### Field of the Invention

The present invention relates generally to a process and system for separating light gas fractions from feed streams comprising predominately carbon dioxide. In one respect, the present process is directed to separating such light gas components, and most preferably to recovering helium, while in another respect the invention is directed to purifying a feed stream containing predominantly carbon dioxide into a high grade carbon dioxide product stream.

### Background of the Invention

Carbon dioxide (CO₂) is a naturally occurring chemical compound useful in a wide range of biological and industrial processes. It is produced during the respiration of aerobic organisms and during the decay of organic materials and can be found in high concentration in natural sites underground. It is also produced as a by-product of multiple industrial processes such as the combustion of fossil fuels, the production of hydrogen by reforming, ammonia synthesis, and fermentation. It has a variety of uses in both gaseous and liquid state. For example, carbon dioxide is used in the food and beverage industry, the welding industry, and the oil production/recovery industry. It is also used as a solvent, flame retardant, refrigerant and in biological and agricultural applications.

Many of these uses require that the carbon dioxide feed stream contain sufficient concentrations of carbon dioxide to be considered a high grade carbon dioxide stream with some uses requiring a high grade stream of more than 98% carbon dioxide by volume. In some instances, the carbon dioxide streams contain meaningful quantities of deep condensable gases; some of which are highly valuable and therefore desirable to capture.

One example of a valuable deep condensable gas is helium. Helium is an industrially important rare gas. For large-scale production, it is normally extracted by fractional distillation from natural gas, which can contain up to 9% helium, but is generally present in amounts of 0.2 to 2%. Helium has unique physical properties making it valuable in a wide range of commercial applications. Typical commercial applications range from balloons to lasers and include heat transfer and cooling applications; shielding applications; gas tracing applications; inert environments; and numerous other commercial applications. However, due to its limited availability and increasing commercial demand its cost has risen substantially.

The past thirty years, and particularly the past decade, has seen a dramatic rise in the use of carbon dioxide for enhanced oil recovery. From 2002 to 2012, oil production using carbon dioxide enhancement increased from 190,000 barrels per day to over 300,000. Rather than using anthropogenic sources, much of this growth in CO2 use has come from natural wells with high carbon dioxide content. Concentrations of CO2 from such wells can be above 85% and even above 95% by volume.

The need for large quantities of carbon dioxide for use in applications such as enhanced oil recovery has prompted the development of more carbon dioxide sources including the capture of industrially produced carbon dioxide and the development of carbon dioxide rich natural wells. These gases, particularly natural deposits, often include significant amounts of light gas impurities, such as the rare gases including helium. The recovery and processing of these gases and particularly helium can substantially improve the overall economics of carbon dioxide production for enhanced oil recovery and other large applications by providing additional revenue generating products.

Thus, recovering the light gas fractions, such as the rare gases and particularly helium, from such carbon dioxide containing streams has become a valuable commercial opportunity if the recovery can be accomplished efficiently and inexpensively. The two common processes for removing light fractions or condensable fractions from heavier fractions include solvents, adsorption or extraction and cryogenic fractionation as are well known. These more traditional processes are normally not economical for this purpose due to the high cost of equipment and/or reactants.

In WO 2006/055324 A2 there is disclosed a method of separating light component(s), such as helium, from carbon dioxide. A pressurized feed stream is at least partially condensed. The resulting containing light component(s) and carbon dioxide stream is degassed to produce a first vapor stream enriched in the light component(s) and a first liquid stream having entrained light component(s). The first vapor stream is warmed in a heat exchanger, and is combined with a warmed and pressurized second vapor stream. The combined stream then is compressed and is sent to a heat exchanger to be cooled before being passed to a phase separator to form a second carbon dioxide enriched stream and a second light gas enriched stream. The first liquid stream is expanded to create another two-phase stream that is degasified to produce the second vapor stream, enriched in the light component(s), and a second liquid stream enriched in carbon dioxide. The second liquid stream is repressurized and vaporized. Thereafter, the feed is degassed to produce a light component enriched vapor stream and a liquid stream enriched in the carbon dioxide. The resultant vapor streams, enriched in the light component(s) may be further processed to isolate the light components.

### Brief Summary of the Invention

The present invention is a process for separating a light gas fraction from a feed stream containing at least 85% CO2 at a pressure of at least 3447 kPa (500 psia) and having a dew point temperature below minus 6,7 °C (20 °F) as it is defined in claim 1. The present invention further is a process for recovering helium from a feed stream containing at least 0.5% helium and predominantly carbon dioxide and having a dew point temperature below minus 6,7 °C (20° F) as it is defined in claim 16.
The present invention is directed to removing light components, lighter than carbon dioxide, and preferably helium from a carbon dioxide containing streams, such as commercial grade or naturally occurring streams containing at least 85% carbon dioxide. It is also directed to purifying a feed stream containing predominantly carbon dioxide to a high grade carbon dioxide product stream. The present process employs a first cooling and condensation step using a "warm distillation" process to reduce or eliminate the fine pre-drying step and the associated capital costs and operating energy requirements. The cooling and condensation process of this invention acts as a first and primary separation step to separate a significant portion of the light gas components and reduce the processing gas volume prior to conducting additional or fine separation steps. Additional separation and processing steps can then be conducted on smaller volumes of process gas using less capital intense equipment and lower operating costs.

### Brief Description of the Drawings

While the specification concludes with claims distinctly pointing out the subject matter that Applicants regard as their invention, it is believed that the invention will be better understood when taken in connection with the accompanying drawings in which:

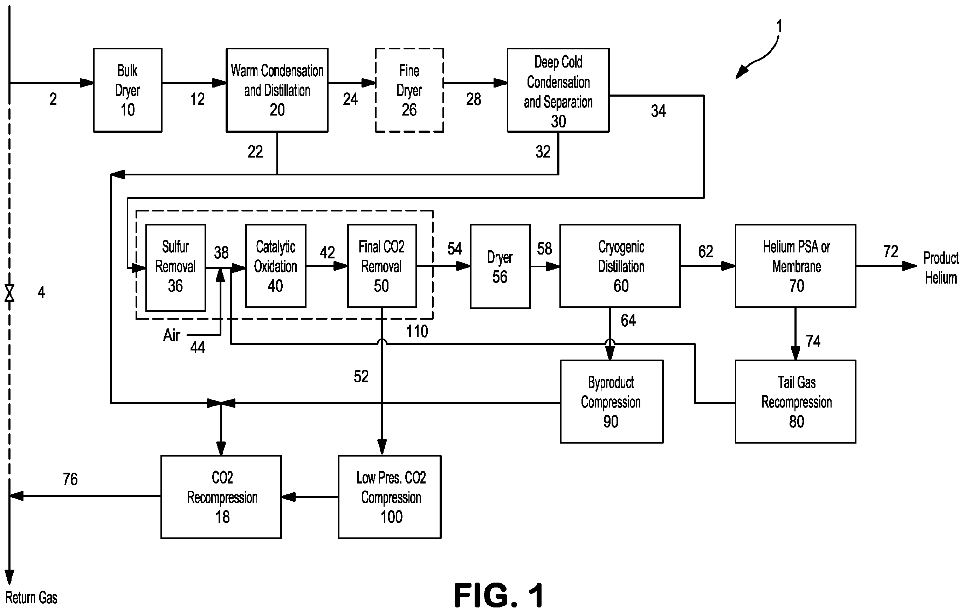

FIG. 1 is a schematic process flow diagram of an apparatus for carrying out a method in accordance with the present invention.

### Detailed Description of the Invention

According to this invention, light gas fractions are removed from a feed stream comprising predominately carbon dioxide in a multiple step process designed to be highly efficient using reduced capital equipment requirements. The light gas components or fraction can comprise rare gases, hydrocarbons, hydrogen, atmospheric gases, and other trace gases which have densities less than that of carbon dioxide. Such feed streams can be found as a naturally occurring underground gas supply in a well or as the production or waste stream from various industrial processes. The present process uses a low cost first cooling and condensation step as the primary separation process thereby removing the bulk of the light fraction gases without the need for, or otherwise in the absence of, cryogenic or deep cold liquefaction separation requirements and temperatures as the primary or bulk separation process. The temperatures employed during this primary separation step, referred herein as a warm distillation process, are significantly above conventional commercial cryogenic separation temperatures.

While not intended to limit the scope of this invention, a preferred embodiment is provided in Figure 1 showing a process for recovering the light gas components from a feed stream containing predominantly carbon dioxide which are further processed to recover helium. With reference to the embodiment shown in FIG. 1, process 1 is designed to recover one or more light gas components from carbon dioxide feed stream 2 at elevated pressure. In this embodiment, carbon dioxide feed stream 2, having at least 85% carbon dioxide by volume, is taken from a carbon dioxide feed source and is typically already at pressure, such as from a CO2 compression system associated with a natural well. However, carbon dioxide feed stream 2 can be pressurized if from a low pressure source or depressurized if from a super critical pressure source using conventional systems.

The separation of the light gas fraction results in the recovery of high grade carbon dioxide streams. As previously discussed, high grade carbon dioxide streams have numerous applications including the injection of such streams into underground formations to promote enhanced oil recovery.

In accordance with this embodiment, carbon dioxide feed stream 2 which can be a naturally occurring stream obtained from a well or a stream from a commercial process is taken at super-atmospheric pressure generally ranging from above 3447 kPa (500 psia) and preferably from 3447 to 6205 kPa (500 to 900 psia), is dried in bulk dryer 10 and passed into a cooling and condensation unit 20. Although not shown here, the carbon dioxide feed stream 2 can be taken directly into unit 20 without drying, provided that the dew point of feed stream 2 is below minus 6,7 °C (20°F), below which water vapor will condense and leave the feed stream as liquid water. Such a feed stream, or the stream after drying, is referred to herein as dry carbon dioxide feed stream 12. Carbon dioxide feed streams having a dew point above minus 6,7 °C (20°F), are dried in bulk dryer 10 which is designed to be a low cost method to incompletely remove water vapor, but still render a sufficiently dry feed stream. Such dryers are considerably less expensive as compared to "fine" dryers capable of removing higher amounts of water as are required prior to deep cold or cryogenic distillation processes. Bulk dryer 10 can be used to remove water vapor to a dew point specification of below minus 6,7 °C (20°F), and more preferably below minus 23 °C (-10°F) and most preferably below minus 34 °C (-30°F), but is not required if the carbon dioxide feed stream 12 has a dew point temperature below minus 6,7 °C (20°F). For clarification, the description of the dew point here and its calculation for determining whether bulk drying is required includes water content.

Prepurification of carbon dioxide feed stream 2 can also optionally be conducted (not shown) to remove certain particulates or contaminants as needed. Such prepurification would be conducted through the use of adsorbents or absorbents as is known. However, in the initial phase of separation as shown in this embodiment, it is preferred to minimize gas processing. Associated costs and pretreatment processes are generally avoided when possible.

Dry carbon dioxide feed stream 12 contains predominantly carbon dioxide, hydrocarbons and atmospheric gases such as rare gases and helium. In a preferred embodiment of this invention, helium gas is recovered from the light gas fraction and, for such applications; carbon dioxide feed stream 2 will contain at least about 0.5% helium and preferably 1% or more helium by volume. As used herein, "containing predominantly carbon dioxide" means a stream with more than 85 % and, preferably more than 90 %by volume carbon dioxide. Preferably, the total hydrocarbon concentration of carbon dioxide feed stream 2 will be below 15% and more preferably below 10% by volume. A high grade carbon dioxide stream as used here means a stream having at least 95 % and preferably at least 98% carbon dioxide by volume. Both such streams, will preferably have low concentrations of contaminant gases such as oxygen, argon, sulfur compounds and nitrogen oxides, such as less than 500 ppm, more preferably less than 100ppm of each.

Bulk dryer 10 is preferably a glycol dehydration system wherein a liquid desiccant is used for the removal of water and other trace impurities from feed stream 2. Such processes are well known and are commonly used to remove water from process gas streams, such as natural gas streams. Depending on the specific process, other known drying or separation processes can be used such as adsorption systems that contain one or more beds of molecular sieve adsorbent or alumina; regenerative desiccant dryers, often called "regens" or "twin tower" dryers, and non-adsorbent based systems such as reversing heat exchangers. Dry carbon dioxide feed stream 12, either received in such a dry state or after bulk drying is cooled in a heat exchanger section of unit 20 (unit 20 having a heat exchanger along with a distillation column) which partially liquefies the stream. Feed stream 12 is cooled to a temperature T₁ of not more than 14 °C (25°F) below its "dry gas dew point" (as used herein) and while some water may remain in the stream, it is important to note that the water is not considered here in calculating T₁. Conventional heat exchange systems can be employed for the effective recovery of or reuse of heat energy between the dry carbon dioxide feed stream 12 and one or more product streams leaving unit 20 or other process gasses as described below.

Dry carbon dioxide feed stream 12, still at pressure, is sent to the "warm" distillation column in unit 20 to conduct the first and primary phase separation. This condensation and separation step is considered a warm process since temperatures significantly above conventional CO2 distillation separation temperatures are used. The amount of carbon dioxide that can be recovered in the warm distillation is a function of the feed pressure, condensation temperature, feed composition and operating conditions of the distillation section of unit 20. As is appreciated by the skilled person, the recovery may be increased by increasing this pressure although an increase in pressure may result in greater production costs. The optimum pressure will therefore vary with the particular application and, for the embodiment shown, will typically range from 3447 to 6205 kPa (500 to 900 psia). For this embodiment, at least 33% by volume of the available carbon dioxide will be separated from dry feed stream 12 during the primary separation step (cooling and condensing step). In the event that dry feed stream 12 had a carbon dioxide content of greater than 97% by volume, then approximately 90% of the available carbon dioxide will be separated from feed stream 2 during this primary phase separation stage.

As previously stated, the distillation column in unit 20 is operated at temperatures that are significantly warmer than typical carbon dioxide distillation processes. The distillation column in unit 20 is operated at temperatures of not more than 14 °C (25°F) below the dew point of the dry carbon dioxide feed stream 12, such dew point being determined without considering the water content. The distillation column in unit 20 will typically be operated at temperatures above minus 6,7 °C (20 degrees F), and preferably above minus 1 °C (30 degrees F). The process for the primary carbon dioxide phase separation step is therefore conducted in the absence of a cryogenic or deep cold liquefaction process and in the absence of cryogenic or deep cold separation temperatures. The warm distillation step being above cryogenic, generally minus 57 °C (minus 70°F), or deep cold temperatures, between about minus 40 °C to minus 57 °C (minus 40°F to minus 70°F), provides numerous advantages, such as a lower operating and capital costs. It is also possible to run the warm distillation column in unit 20 in a manner which optimizes recovery of light gases if recovery of a higher value light product is desired to enhance process economics. In addition, due to a less stringent water removal requirement, the upstream drying equipment can be designed to also have lower operating and capital costs.

According to this embodiment, at least two streams exit the warm distillation column in unit 20 with two streams being shown in Figure 1. First carbon dioxide rich stream 22 will contain greater than 95% by volume, preferably greater than 97% by volume, of carbon dioxide. First carbon dioxide rich stream 22 will be substantially depleted of deep condensable gases such as any rare gases (including helium) and is subjected to recompression in unit 18. Recompression unit 18 may include several stages of compression and associated intercooling to maximize efficiency as is known. First carbon dioxide rich stream 22 can be captured or returned to the source compression train as desired. Refrigeration for cooling of dry carbon dioxide stream 12 for continued processing can come from an external refrigerant stream or another internal side stream used as the refrigerant stream. Optionally, at least part of the pressure of first carbon dioxide rich stream 22 can be reduced and then substantially vaporized by warming it in indirect heat exchange with feed stream 12 (not shown). In this embodiment, a portion of first carbon dioxide rich stream 22 is depressurized by between about 50 to about 200 psig, and a temperature T₂ higher than T_{1,} and is substantially vaporized in indirect heat exchange with a cooling feed stream. A refrigerating stream, which can be a second portion of first carbon dioxide rich stream 22, obtained at a temperature T₃ which is lower than T₁ is subjected to indirect heat exchange with the feed stream 12 for cooling feed stream 12 to a temperature T₁ from T₂ Splitting the refrigeration load in this way can process economics by lowering the total recompression necessary. First carbon dioxide rich stream 22, either with or without heat exchange, can be repressurized in recompression unit 18 as needed.

As described, first carbon dioxide rich stream 22 can be substantially vaporized by indirect heat exchange with at least a partial stream from feed stream 12 (not shown) to improve the efficiency of the process. Alternatively, a refrigeration stream can be used to substantially condense carbon dioxide rich feed stream 22 which can be either a second stream taken from carbon dioxide rich stream 22 and expanded, or a separate stream used for this purpose such as a refrigerant gas, propane or similar hydrocarbon containing gas (also not shown).

First light gas enriched stream 24 is the second stream shown leaving unit 20 and is typically less than about 10% of the total feed gas volume when feed gas stream 2 is greater than 95% by volume carbon dioxide. All processing steps after the primary phase separation step will be conducted on a substantially smaller volume of gas reducing process and equipment costs. First light gas enriched stream 24 will contain residual carbon dioxide and the light gas components. First light gas enriched stream 24 is optionally sent to fine drying unit 26 to remove any remaining moisture as may be required to avoid condensation/solidification prior to deep cold separation and will result in a first light gas enriched stream 24 converted into stream 28 (the dry first light gas enriched stream 28 leaving the optional fine drying unit 26 as shown) having a dew point of less than minus 57 °C (minus 70°F). First light gas enriched stream 28 leaving optional unit 26 is sent to deep cold condensation unit 30 for further separation. Optional fine drying unit 26 is typically an adsorbent type drying system. The use and operation of such fine dryers is well known and they are commercially available.

First light gas enriched stream 28 is then passed to deep cold condensation unit 30 and phase separated into at least two streams; second carbon dioxide rich stream 32 and second light gas enriched stream 34. Deep cold condensation unit 30 is used for the secondary carbon dioxide phase separation step and is typically conducted at temperatures of between minus 40 °C to minus 57 °C (minus 40°F and minus 70°F) and is preferably at about minus 51 °C (minus 60 degrees F). Second carbon dioxide rich stream 32 will be at purity concentrations of over 98%. Second carbon dioxide rich stream 32 is depressurized and can be vaporized by warming it in indirect heat exchange with the partially condensing first light gas enriched stream 28 (heat exchange not shown). Second carbon dioxide rich stream 32 may consist of two or more separate streams from deep cold separation unit 30 which can be combined as one stream as desired. Second carbon dioxide rich stream 32 can be sent for recompression in recompression unit 18 or can be sent as shown to carbon dioxide rich stream 22 prior to recompression and prior to being recovered as desired.

Second light gas enriched stream 34 goes through further processing before cryogenic light gas recovery. Second light gas enriched stream 34 may consist of two or more separate streams from cold separation unit 30 which can be again combined into one stream as desired. Alternative embodiments for section 110 of the process may be possible to optimize the process based on the particular feed stream, and may require more or less of the identified process units as needed. For instance, catalytic oxidation unit 40 described below could be placed after the final carbon dioxide removal unit 50, or may be eliminated from the process as is apparent to one skilled in the art based on the feed stream composition and process requirements. In the embodiment as shown, second light gas enriched stream 34, containing the light gas components including any hydrocarbons is sent to a sulfur removal unit 36. Sulfur removal unit 36 may be an absorbent or adsorbent type unit, or other sulfur removal technology unit as known to those skilled in the art. Further, its location in the process may be moved to achieve different product purity requirements. Sulfur depleted stream 38 is then sent to catalytic oxidation unit 40 for hydrogen removal. Catalytic oxidation unit 40 can be any type of known reactor for removing hydrogen in an oxidation type reaction. In such catalytic oxidation units, oxygen and hydrogen molecules typically react to form water at elevated temperatures. In the catalytic oxidation process, air is the oxidant used in the process as is shown by line 44. Of course, various purities of an oxygen containing gas can also be used as the oxidant gas. The catalytic oxidation process enables the hydrogen oxidation to proceed at much lower temperature (e. g. 250° to 600°C) than required for non-catalytic flame-type or similar combustion processes. The catalysts used in such reactions are typically precious metal such as palladium or platinum. Catalytic oxidation units are commercially available and are well known in the field.

Hydrogen lean stream 42 now exits catalytic oxidation unit 40 and is preferably sent to CO2 removal unit 50 in which any residual carbon dioxide is removed in a third carbon dioxide separation step to produce third carbon dioxide rich stream 52 and saturated light gas stream 54. Third carbon dioxide rich stream. 52 comprising substantially all of the remaining CO2 from hydrogen lean stream 42 and having typically a purity of over about 99% is discharged from CO2 removal unit 50 and sent to recompression unit 100 before being sent to compression unit 18. Although shown separately, it is possible that compression unit 100 and compression unit 18 can be combined into one unit. Further, it should be noted that streams 22, 32, and 52 are typically compressed from different pressures and several possible compression arrangements can exist depending on optimization and recovery requirements as known to those skilled in the art. CO2 removal unit 50 can use any of the known carbon dioxide removal or separation systems including adsorption into suitable liquids, typically amines, or mechanical separation processes for separating gases using permeable membrane technology. Preferred carbon dioxide removal systems are amine gas treatments, also known as gas treating, gas sweetening or acid gas removal. Amine gas treatments refers to a group of processes that use aqueous solutions of various alkylamines (commonly referred to simply as amines) to remove hydrogen sulfides and carbon dioxide from gas streams. Such units are well known and commercially available. As shown in this embodiment, carbon dioxide stream 76 which includes the combined compressed carbon dioxide product streams may be returned to the source for use in a number of applications and particularly for enhanced oil recovery.

At this point of the process, a bypass valve (not shown) can be incorporated into third light gas enriched stream 54 to bypass additional processing with third light gas enriched stream 54 being used as an additional fuel source, recovered for further processing, or vented if the only goal of the process is carbon dioxide purification. Of course, if the purpose of the present process is to upgrade and recover high grade carbon dioxide, no additional process equipment is needed and the process would end with the recovery of third carbon dioxide rich stream 52 which is combined with the earlier carbon dioxide rich streams, as desired, resulting in a high grade carbon dioxide product stream. If additional recovery of the light gas fraction is desired, as shown in the embodiment in Figure 1, third light gas enriched stream 54 is sent for further processing as described below.

To recover at least one additional light fraction gas, and preferably helium in accordance with this embodiment, third light gas enriched stream 54 containing the remaining light gas components including one or more of the rare gases, nitrogen and traces amounts of residual hydrocarbons is dried in dryer 56 and dried light gas stream 58 is sent to cryogenic distillation unit 60 for further separation. As understood by the skilled person, dried light gas stream 58 will be a small volume, typically less than about 15% of the volume of feed stream 2. Thus the further processing of the remaining light gas components can be conducted using equipment requiring minimal capital and processing costs. Cryogenic distillation unit 60 is used to separate the desired product gas, preferably one or more light gases and more preferably helium, from the remaining light gases.

The gas streams leaving cryogenic distillation unit 60 are referred to for convenience as helium rich stream 62 and byproduct stream 64 although any other light gas in the light gas fraction can be recovered using this process and as such recovery is considered an equivalent embodiment. Byproduct stream 64 is defined as substantially containing gases with a boiling point higher than that of helium and lower than that of carbon dioxide. Helium rich stream 62 will have a purity of more than about 75%, and preferably more than 85%, and may be sent to helium separation unit 70 which separates the desired product gas, here helium, from the remaining lights. It is possible in other embodiments of this invention to recover helium rich stream 62 which could be compressed and sent to an offsite facility for further processing and/or purification. Helium product gas stream 72 will typically be at purities of greater than about 85%, more preferably at purities of greater than about 90%, and most preferably at purities of greater than 99.99% helium by volume. Helium product gas 72 is recovered for future commercial use.

The remaining gases and small amounts of non-recovered helium in waste light fraction stream 74 from helium separation unit 70 are preferably recompressed in tail gas recompression compressor 80 and sent to catalytic oxidation unit 40 as shown to reduce the loss of helium product. One skilled would understand there are other possible points to reintroduce the recycled stream. Helium separation unit 70 can be any available separation system, but will typically be a membrane separation system or a pressure swing adsorption system. Both membrane and pressure swing adsorption systems are well known and commercially available.

Finally, byproduct stream 64 leaving cryogenic distillation unit 60 can be either vented to atmosphere or sent for recovery. In a preferred embodiment of the present process, all or part of byproduct stream 64 is optionally compressed in byproduct compressor 90 and returned to one or more of the carbon dioxide streams such as carbon dioxide stream 22 or second carbon dioxide rich stream 52 to preserve volume of the processed feed stream. One skilled in the art can see there may be alternative embodiments with byproduct stream 64 compressed in other compressors depending upon pressure.

Finally, in the event that the carbon dioxide purification/light gas recovery facility shuts down, bypass valve 4 and associated controls are included to ensure that the user of the carbon dioxide product gas could bypass the facility (process) and continue to receive gas flow such as in a pipeline operation.

## Claims

1. A process for separating a light gas fraction from a feed stream (2) containing at least 85% by volume CO₂ at a pressure of at least 3447 kPa(500 psia) and having a dew point temperature below minus 6,7 °C (20 °F) comprising the following steps:
(A) cooling and condensing at least a portion of the feed stream (2) to a temperature (T₁) of not less than 13,9 °C (25 °F) below the dry gas dew point of the at least a portion of the feed stream to form a first carbon dioxide enriched stream (22) having a purity greater than about 95% by volume carbon dioxide and a first light gas enriched stream (24);
(B) recovering the first carbon dioxide enriched stream (22);
(C) cooling and condensing the first light gas enriched stream (24) resulting from step (A), optionally after drying in a fine drying unit (26), at a temperature of less than minus 40 °C (minus 40 °F) to form a second carbon dioxide enriched stream (32) and a second light gas enriched stream (34);
(D) recovering the second carbon dioxide enriched stream (32);
(E) passing the second light gas stream (34) through a CO₂ removal unit to remove residual carbon dioxide and form a third carbon dioxide rich stream (52) having a purity greater than 95% by volume carbon dioxide and a third light gas enriched stream (54); and
(F) recovering the third carbon dioxide enriched stream (52).

2. The process of claim 1 wherein one or more of the carbon dioxide enriched streams (22, 32, 52) are recovered as a high grade carbon dioxide product stream.

3. The process of claim 1 wherein the second light gas enriched stream (34) is passed through a catalytic oxidation unit (40) to remove hydrogen prior to being passed to the CO₂ removal unit (50);
the third light gas enriched stream (54) is passed through a cryogenic distillation unit (60) to produce a helium rich stream (62) and a byproduct stream (64);
the helium rich stream (62) is then passed through a helium separation unit (70) to produce a helium product gas stream (72) having a purity of greater than 85% helium by volume.

4. The process of claim 3 wherein the helium product gas stream (72) is at purities of greater than 99.99% helium by volume,

5. The process of claim 1 wherein a warm distillation is used for condensing at least a portion of the feed stream (2).

6. The process of claim 5 where the warm distillation is conducted at temperatures of not less than minus 6,7 °C (20 °F).

7. The process of claim 1 wherein at least 33% by volume of the available carbon dioxide in the feed stream (2) is separated during the cooling and condensing step.

8. The process of claim 1 wherein the first carbon dioxide rich stream (22) is partially condensed by indirect heat exchange with a refrigerant stream.

9. The process of claim 8 wherein the refrigeration is derived from depressurizing at least a portion of the first carbon dioxide rich stream (22) to a pressure lower than the feed pressure and a temperature T₂ higher than T₁, and substantially vaporizing the carbon dioxide rich stream in indirect heat exchange with a cooling feed stream.

10. The process of claim 9 wherein a refrigerating stream obtained at a temperature T₃ which is lower than T₁ is subjected to indirect heat exchange with the feed stream for cooling the feed stream to a temperature T₁ from T₂.

11. The process of claim 10 where the refrigerating stream at T₃ is a portion of the first carbon dioxide rich stream.

12. The process of claim 1 wherein the feed stream (2) is a naturally occurring stream obtained from a well that is dried in a bulk dryer (10).

13. The process of claim 2 wherein the cooling and partially condensing is conducted at temperatures above minus 1,1 °C (30 °F) and pressures ranging from 3447 to 6205 kPa (500 to 900 psia).

14. The process of claim 3 wherein the byproduct stream (64) is compressed and returned to one or more of the carbon dioxide enriched streams.

15. The process of claim 1 wherein prepurification of the feed stream is conducted to remove particulates or contaminants.

16. A process for recovering helium from a feed stream (2) containing at least 0.5% helium and predominantly carbon dioxide and having a dew point temperature below minus 6,7 °C (20 °F) comprising:
(A) cooling and partially condensing at least a portion of the feed stream (2) to form a first carbon dioxide enriched stream (22) having greater than 95% by volume carbon dioxide and a first light gas enriched stream (24);
(B) recovering the first carbon dioxide enriched stream (22);
(C) cooling and condensing the first light gas enriched stream (24), resulting from step (A), optionally after drying in a fine drying unit (26), at a temperature of less than minus 40 °C (minus 40 °F) into a second carbon dioxide enriched stream (32) and a second light gas enriched stream (34);
(D) recovering the second carbon dioxide enriched stream (32);
(E) passing the second light gas enriched stream (34) through a catalytic oxidation unit (40) to form a hydrogen lean stream (42);
(F) passing the hydrogen lean stream (42) through a CO₂ removal unit (50) to remove residual carbon dioxide and form a third carbon dioxide rich stream (52) having greater than 95% by volume carbon dioxide and a third light gas enriched stream (54);
(G) capturing the third carbon dioxide enriched stream (52);
(H) passing the third light gas enriched stream (54) through a cryogenic distillation unit (60) to produce a helium rich stream (62) and a byproduct stream (64);
(I) passing the helium rich stream (62) through a helium separation unit (70) to form a waste light fraction stream (74) and a helium product gas stream (72) at purities of greater than 95% helium by volume; and
(J) recovering the helium product gas stream (72).

17. The process of claim 16 wherein the helium product gas stream (72) is at a purity of greater than 99.99% helium by volume.

18. The process of claim 17 wherein the cooling and partially condensing at least a portion of the feed stream (2) is conducted at temperatures above about 30 °F and pressures ranging from 3447 to 6205 kPa (500 to 900 psia).

19. The process of claim 16 wherein the byproduct stream (64) is compressed and returned to one or more of the carbon dioxide enriched streams (22, 32, 52).

## Patentansprüche

1. Verfahren zum Trennen einer Leichtgasfraktion von einem Zustrom (2), der wenigstens 85 Vol.-% CO₂ bei einem Druck von wenigstens 3447 kPa (500 psia) enthält und eine Taupunkttemperatur von unter minus 6,7 °C (20 °F) aufweist, umfassend die folgenden Schritte:
(A) Abkühlen und Kondensieren wenigstens eines Teils des Zustroms (2) auf eine Temperatur (T₁) von mindestens 13,9 °C (25 °F) unterhalb des Trockengas-Taupunkts von dem wenigstens einen Teil des Zustroms, um einen ersten kohlendioxidangereicherten Strom (22) zu bilden, der eine Reinheit von mehr als etwa 95 Vol.-% Kohlendioxid und einen ersten leichtgasangereicherten Strom (24) aufweist;
(B) Zurückgewinnen des ersten kohlendioxidangereicherten Stroms (22);
(C) Abkühlen und Kondensieren des ersten leichtgasangereicherten Stroms (24), der sich aus Schritt (A) ergeben hat, optional nach dem Trocknen in einer Feintrockeneinheit (26), bei einer Temperatur von unter minus 40 °C (minus 40 °F), um einen zweiten kohlendioxidangereicherten Strom (32) und einen zweiten leichtgasangereicherten Strom (34) zu bilden;
(D) Zurückgewinnen des zweiten kohlendioxidangereicherten Stroms (32);
(E) Hindurchführen des zweiten Leichtgasstroms (34) durch eine CO₂-Entfernungseinheit, um restliches Kohlendioxid zu entfernen und einen dritten kohlendioxidreichen Strom (52), der eine Reinheit von über 95 Vol.-% Kohlendioxid aufweist, und einen dritten leichtgasangereicherten Strom (54) zu bilden; und
(F) Zurückgewinnen des dritten kohlendioxidangereicherten Stroms (52).

2. Verfahren nach Anspruch 1, wobei ein oder mehrere der kohlendioxidangereicherten Ströme (22, 32, 52) als ein hochwertiger Kohlendioxid-Produktstrom zurückgewonnen werden.

3. Verfahren nach Anspruch 1, wobei der zweite leichtgasangereicherte Strom (34) durch eine katalytische Oxidationseinheit (40) hindurchgeführt wird, um vor dem Hindurchführen durch die CO₂-Entfernungseinheit (50) Wasserstoff zu entfernen;
wobei der dritte leichtgasangereicherte Strom (54) durch eine kryogene Destillationseinheit (60) hindurchgeführt wird, um einen heliumreichen Strom (62) und einen Nebenproduktstrom (64) zu erzeugen;
wobei der heliumreiche Strom (62) dann durch eine Heliumtrennungseinheit (70) hindurchgeführt wird, um einen Heliumprodukt-Gasstrom (72) zu erzeugen, der eine Reinheit von mehr als 85 Vol.-% Helium aufweist.

4. Verfahren nach Anspruch 3, wobei der Heliumprodukt-Gasstrom (72) Reinheiten von mehr als 99,99 Vol.-% Helium aufweist.

5. Verfahren nach Anspruch 1, wobei zum Kondensieren wenigstens eines Teils des Zustroms (2) eine Wärmedestillation verwendet wird.

6. Verfahren nach Anspruch 5, wobei die Wärmedestillation bei Temperaturen von mindestens minus 6,7 °C (20°F) durchgeführt wird.

7. Verfahren nach Anspruch 1, wobei wenigstens 33 Vol.-% des verfügbaren Kohlendioxids in dem Zustrom (2) während dem Abkühlungs- und Kondensationsschritt getrennt werden.

8. Verfahren nach Anspruch 1, wobei der erste kohlendioxidreiche Strom (22) durch einen indirekten Wärmetausch mit einem Kühlmittelstrom teilweise kondensiert wird.

9. Verfahren nach Anspruch 8, wobei das Tiefkühlen von dem Herabsetzen des Drucks wenigstens eines Teils des ersten kohlendioxidreichen Stroms (22) auf einen Druck, der niedriger als der Zufuhrdruck ist, und von einer Temperatur T₂, die höher als T₁ ist, und im Wesentlichen den kohlendioxidreichen Strom in einem indirekten Wärmetausch mit einem Abkühlungszustrom verdampft, abgeleitet ist.

10. Verfahren nach Anspruch 9, wobei ein Tiefkühlungsstrom, der bei einer Temperatur T₃, die niedriger als T₁ ist, erhalten wird, mit dem Zustrom zum Abkühlen des Zustroms auf eine Temperatur T₁ von T₂ einem indirekten Wärmetausch ausgesetzt wird.

11. Verfahren nach Anspruch 10, wobei der Tiefkühlungsstrom bei T₃ ein Teil des ersten kohlendioxidreichen Stroms ist.

12. Verfahren nach Anspruch 1, wobei der Zustrom (2) ein natürlich vorkommender Strom ist, der von einem Tauchrohr erhalten wird, der in einem Sammeltrockner (10) getrocknet wird.

13. Verfahren nach Anspruch 2, wobei das Abkühlen und teilweise Kondensieren bei Temperaturen von über minus 1,1 °C (30 °F) und Drücken im Bereich von 3447 bis 6205 kPa (500 bis 900 psia) durchgeführt wird.

14. Verfahren nach Anspruch 3, wobei der Nebenproduktstrom (64) verdichtet und einem oder mehreren der kohlendioxidangereicherten Ströme zurückgeführt wird.

15. Verfahren nach Anspruch 1, wobei die Vorreinigung des Zustroms durchgeführt wird, um Partikel oder Kontaminanten zu entfernen.

16. Verfahren zum Entfernen von Helium aus einem Zustrom (2), der wenigstens 0,5 % Helium und vorwiegend Kohlendioxid enthält und eine Taupunkttemperatur von unter minus 6,7 °C (20 °F) aufweist, umfassend:
(A) Abkühlen und teilweise Kondensieren wenigstens eines Teils des Zustroms (2), um einen ersten kohlendioxidangereicherten Strom (22) zu bilden, der mehr als 95 Vol.-% Kohlendioxid und einen ersten leichtgasangereicherten Strom (24) aufweist;
(B) Zurückgewinnen des ersten kohlendioxidangereicherten Stroms (22);
(C) Abkühlen und Kondensieren des ersten leichtgasangereicherten Stroms (24), der sich aus Schritt (A) ergeben hat, optional nach dem Trocknen in einer Feintrockeneinheit (26), bei einer Temperatur von weniger als minus 40 °C (minus 40 °F), in einen zweiten kohlendioxidangereicherten Strom (32) und einen zweiten leichtgasangereicherten Strom (34);
(D) Zurückgewinnen des zweiten kohlendioxidangereicherten Stroms (32);
(E) Hindurchführen des zweiten leichtgasangereicherten Stroms (34) durch eine katalytische Oxidationseinheit (40), um einen wasserstoffarmen Strom (42) zu bilden;
(F) Hindurchführen des wasserstoffarmen Stroms (42) durch eine CO₂-Entfernungseinheit (50), um restliches Kohlendioxid zu entfernen und einen dritten kohlendioxidreichen Strom (52) zu bilden, der über 95 Vol.-% Kohlendioxid und einen dritten leichtgasangereicherten Strom (54) aufweist;
(G) Erfassen des dritten kohlendioxidangereicherten Stroms (52) ;
(H) Hindurchführen des dritten kohlendioxidangereicherten Stroms (54) durch eine kryogene Destillationseinheit (60), um einen heliumreichen Strom (62) und einen Nebenproduktstrom (64) zu erzeugen;
(I) Hindurchführen des heliumreichen Stroms (62) durch eine Heliumtrennungseinheit (70), um einen Leichtgasfraktions-Abgasstrom (74) und einen Helium-Produktgasstrom (72) bei Reinheiten von mindestens 95 Vol.-% Helium zu bilden; und
(J) Zurückgewinnen des Helium-Produktgasstroms (72).

17. Verfahren nach Anspruch 16, wobei der Helium-Produktgasstrom (72) eine Reinheit von über 99,99 Vol.-% Helium aufweist.

18. Verfahren nach Anspruch 17, wobei das Abkühlen und teilweise Kondensieren wenigstens eines Teils des Zustroms (2) bei Temperaturen von über etwa 30 °F und bei Drücken im Bereich von 3447 bis 6205 kPa (500 bis 900 psia) durchgeführt wird.

19. Verfahren nach Anspruch 16, wobei der Nebenproduktstrom (64) verdichtet und einem oder mehreren der kohlendioxidangereicherten Ströme (22, 32, 52) zurückgeführt wird.

## Revendications

1. Procédé de séparation d'une fraction de gaz légers à partir d'un courant d'alimentation (2) contenant au moins 85 % en volume de CO₂ à une pression d'au moins 3 447 kPa (500 psia) et ayant une température de point de rosée inférieure à moins 6,7 °C (20 °F) comprenant les étapes suivantes :
(A) refroidissement et condensation d'au moins une partie du courant d'alimentation (2) à une température (T₁) inférieure d'au plus 13,9 °C (25 °F) par rapport au point de rosée du gaz sec de l'au moins une partie du courant d'alimentation pour former un premier courant enrichi en dioxyde de carbone (22) ayant une pureté supérieure à environ 95 % en volume de dioxyde de carbone et un premier courant enrichi en gaz légers (24) ;
(B) récupération du premier courant enrichi en dioxyde de carbone (22) ;
(C) refroidissement et condensation du premier courant enrichi en gaz légers (24) résultant de l'étape (A), éventuellement après séchage dans une unité de séchage fin (26), à une température inférieure à moins 40 °C (moins 40 °F) pour former un deuxième courant enrichi en dioxyde de carbone (32) et un deuxième courant enrichi en gaz légers (34) ;
(D) récupération du deuxième courant enrichi en dioxyde de carbone (32) ;
(E) passage du deuxième courant de gaz légers (34) à travers une unité d'élimination du CO₂ pour éliminer le dioxyde de carbone résiduel et former un troisième courant riche en dioxyde de carbone (52) ayant une pureté supérieure à 95 % en volume de dioxyde de carbone et un troisième courant enrichi en gaz légers (54) ; et
(F) récupération du troisième courant enrichi en dioxyde de carbone (52).

2. Procédé selon la revendication 1, dans lequel un ou plusieurs des courants enrichis en dioxyde de carbone (22, 32, 52) sont récupérés en tant que courant de dioxyde de carbone produit de qualité supérieure.

3. Procédé selon la revendication 1, dans lequel le deuxième courant enrichi en gaz légers (34) est passé à travers une unité d'oxydation catalytique (40) pour éliminer l'hydrogène avant son passage dans l'unité d'élimination de CO₂ (50) ;
le troisième courant enrichi en gaz légers (54) est passé à travers une unité de distillation cryogénique (60) pour produire un courant riche en hélium (62) et un courant de produit secondaire (64) ;
le courant riche en hélium (62) est ensuite passé à travers une unité de séparation d'hélium (70) pour produire un courant d'hélium gazeux produit (72) ayant une pureté supérieure à 85 % d'hélium en volume.

4. Procédé selon la revendication 3, dans lequel le courant d'hélium gazeux produit (72) est produit à des puretés supérieures à 99,99 % d'hélium en volume.

5. Procédé selon la revendication 1, dans lequel une distillation à chaud est utilisée pour condenser au moins une partie du courant d'alimentation (2).

6. Procédé selon la revendication 5, dans lequel la distillation à chaud est réalisée à des températures supérieures ou égales à moins 6,7 °C (20 °F).

7. Procédé selon la revendication 1, dans lequel au moins 33 % en volume du dioxyde de carbone disponible dans le courant d'alimentation (2) est séparé pendant l'étape de refroidissement et de condensation.

8. Procédé selon la revendication 1, dans lequel le premier courant riche en dioxyde de carbone (22) est en partie condensé par échange thermique indirect avec un courant de réfrigérant.

9. Procédé selon la revendication 8, dans lequel la réfrigération résulte de la décompression d'au moins une partie du premier courant riche en dioxyde de carbone (22) jusqu'à une pression inférieure à la pression d'alimentation et à une température T₂ supérieure à T₁, et l'évaporation substantielle du courant riche en dioxyde de carbone par échange thermique indirect avec un courant d'alimentation de refroidissement.

10. Procédé selon la revendication 9, dans lequel un courant de réfrigération obtenu à une température T₃ qui est inférieure à T₁ est soumis à un échange thermique indirect avec le courant d'alimentation pour refroidir le courant d'alimentation jusqu'à une température T₁ en partant de T₂.

11. Procédé selon la revendication 10, dans lequel le courant de réfrigération à T₃ consiste en une partie du premier courant riche en dioxyde de carbone.

12. Procédé selon la revendication 1, dans lequel le courant d'alimentation (2) consiste en un courant présent à l'état naturel obtenu d'un puits qui est séché dans un séchoir en masse (10).

13. Procédé selon la revendication 2, dans lequel le refroidissement et la condensation partielle est réalisée à des températures supérieures à moins 1,1 °C (30 °F) et à des pressions situées dans la plage allant de 3 447 à 6 205 kPa (de 500 à 900 psia).

14. Procédé selon la revendication 3, dans lequel le courant de produit secondaire (64) est comprimé et renvoyé dans un ou plusieurs des courants enrichis en dioxyde de carbone.

15. Procédé selon la revendication 1, dans lequel la prépurification du courant d'alimentation est réalisée pour éliminer les particules ou les contaminants.

16. Procédé de récupération d'hélium à partir d'un courant d'alimentation (2) contenant au moins 0,5 % d'hélium et principalement du dioxyde de carbone et ayant une température de point de rosée inférieure à moins 6,7 °C (20 °F) comprenant :
(A) le refroidissement et la condensation partielle d'au moins une partie du courant d'alimentation (2) pour former un premier courant enrichi en dioxyde de carbone (22) comprenant une proportion supérieure à 95 % en volume de dioxyde de carbone et un premier courant enrichi en gaz légers (24) ;
(B) la récupération du premier courant enrichi en dioxyde de carbone (22) ;
(C) le refroidissement et la condensation du premier courant enrichi en gaz légers (24), résultant de l'étape (A), éventuellement après séchage dans une unité de séchage fin (26), à une température inférieure à moins 40 °C (moins 40 °F) de sorte à obtenir un deuxième courant enrichi en dioxyde de carbone (32) et un deuxième courant enrichi en gaz légers (34) ;
(D) la récupération du deuxième courant enrichi en dioxyde de carbone (32) ;
(E) le passage du deuxième courant enrichi en gaz légers (34) à travers une unité d'oxydation catalytique (40) pour former un courant pauvre en hydrogène (42) ;
(F) le passage du courant pauvre en hydrogène (42) à travers une unité d'élimination du CO₂ (50) pour éliminer le dioxyde de carbone résiduel et former un troisième courant riche en dioxyde de carbone (52) comprenant une proportion supérieure à 95 % en volume de dioxyde de carbone et un troisième courant enrichi en gaz légers (54) ;
(G) la capture du troisième courant enrichi en dioxyde de carbone (52) ;
(H) le passage du troisième courant enrichi en gaz légers (54) à travers une unité de distillation cryogénique (60) pour produire un courant riche en hélium (62) et un courant de produit secondaire (64) ;
(I) le passage du courant riche en hélium (62) à travers une unité de séparation d'hélium (70) pour former un courant résiduaire de fraction légère (74) et un courant d'hélium gazeux produit (72) à des puretés supérieures à 95 % d'hélium en volume ; et
(J) la récupération du courant d'hélium gazeux produit (72).

17. Procédé selon la revendication 16, dans lequel le courant d'hélium gazeux produit (72) est produit à une pureté supérieure à 99,99 % d'hélium en volume.

18. Procédé selon la revendication 17, dans lequel le refroidissement et la condensation partielle d'au moins une partie du courant d'alimentation (2) est réalisée à des températures supérieures à environ 30 °F et à des pressions situées dans la plage allant de 3 447 à 6 205 kPa (de 500 à 900 psia).

19. Procédé selon la revendication 16, dans lequel le courant de produit secondaire (64) est comprimé et renvoyé dans un ou plusieurs des courants enrichis en dioxyde de carbone (22, 32, 52) .
